# EUROPEAN PATENT SPECIFICATION

(11) **EP 1 466 534 B1**
(45) Date of publication and mention of the grant of the patent: **03.12.2008**
(21) Application number: 04252092.4
(22) Date of filing: 08.04.2004
(51) Int. Cl.: A23L 2/78, A23L 2/02

(54) **Method of removing nitrate nitrogen from vegetable juice**
Methode zur Entfernung von Nitrat-Stickstoff von Gemüsesäften
procédé pour éliminer l'azote des nitrates de jus de légumes

(30) Priority: 11.04.2003 JP 2003107372
(43) Date of publication of application: 13.10.2004
(73) Proprietor: KAGOME KABUSHIKI KAISHA, Nagoya-shi Aichi-ken (JP)
(72) Inventor: Sumimura, Katsunobu c/o Kagome K.K. Sogokenkyusho, Tochigi-ken (JP); Ushijima, Hideki c/o Kagome K.K. Sogokenkyusho, Tochigi-ken (JP); Hayakawa, Kiro c/o Kagome K.K. Sogokenkyusho, Tochigi-ken (JP); Ishiguro, Yukio c/o Kagome K.K. Sogokenkyusho, Tochigi-ken (JP)
(74) Representative: Smyth, Gyles Darren

(56) References cited:
- EP-A- 0 547 236
- EP-A- 0 858 742
- WO-A-95/29005
- US-A- 2 465 967
- US-B1- 6 544 570
- PATENT ABSTRACTS OF JAPAN vol. 0050, no. 04 (C-038), 13 January 1981 (1981-01-13) & JP 55 131357 A (KAGOME KK), 13 October 1980 (1980-10-13)

## Description

### Background of the Invention

This invention relates to a method of removing nitrate nitrogen from a vegetable juice. A vegetable juice obtained by squeezing vegetables frequently contains nitrate nitrogen, or nitrogen in the form of nitrate ions, derived from the vegetables. Since such nitrate nitrogen is known to be harmful to a person's health, it is desired to remove nitrate nitrogen from a vegetable juice. It is therefore an object of this invention to provide a method of efficiently removing nitrate nitrogen from a vegetable juice.

Methods of using ion exchange resins have been known for removing nitrate nitrogen from a vegetable juice, such as those disclosed in Japanese Patent Publications Tokkai 59-31678, 11-290041 and 54-38373, and in European Published Application Number EP 0 547 236 A1. For example, Japanese Patent Publication Tokkai 54-38373 discloses a process for the ion-exchange treatment of celery juice, in which raw celery is washed, sorted and crushed, and the separated juice part is then subjected to ion-exchange treatment to lower the nitrogen content in the form of nitric acid; EP 0 547 236 Al discloses a process for at least partially removing free chloride and nitrate ions from the pressed juice of green leaves using an ion exchange membrane.

These prior art methods are not favourable because the work of washing and exchanging ion exchange resins is very troublesome and there are other problems such as the flavorful component of the vegetable becoming adsorbed to the ion exchange resin or the odor of the ion exchange resin becoming attached to the vegetable juice. Methods of electrodialysis for treating water containing nitrate nitrogen have also been known, such as disclosed in Japanese Patent Publications Tokkai 7-171574, 9-75990 and 9-103799, but nitrate nitrogen cannot be removed efficiently from a vegetable juice even if the vegetable juice itself is subjected to electrodialysis.

### Summary of the Invention

It is therefore an object of this invention to provide a method with high workability for efficiently removing nitrate nitrogen from a vegetable juice without adversely affecting the original flavor of the vegetable juice.

The present invention relates, in view of the above, to a method of removing nitrate nitrogen from a vegetable juice, said method comprising the steps of concentrating said vegetable juice to obtain a concentrate and subjecting said concentrate to electrodialysis, wherein said vegetable juice is concentrated to Brix concentration 10-60%.

There is no limitation as to the kind of vegetable juice to which the present invention is applicable as long as it contains nitrate nitrogen. In other words, there is no limitation as to the kind of vegetables from which such a vegetable juice may be obtained although the invention is particularly effective against vegetable juice of leafy vegetables (or so-called green vegetables), such as celery, spinach and kale, containing generally a large quantity of nitrate nitrogen.

According to this invention, such a vegetable juice is concentrated first. The invention does not impose any particular limitation on the method of concentration, such as normal concentration, vacuum concentration and concentration by reverse osmosis. Among these, however, the methods of vacuum concentration and concentration by reverse osmosis are favored for the purpose of preventing as much as possible the original flavor of the vegetable juice from becoming spoiled. As will be explained in detail below, nitrate nitrogen can be removed far more efficiently if a vegetable juice is first concentrated and the concentrate thus obtained is subjected to electrodialysis than if the vegetable juice is directly subjected to eletrodialysis without first being concentrated.

It is preferable to adjust the sludge volume (SV) of the vegetable juice to less than 10%, and more preferably to less than 5%, before it is concentrated. In the above, the sludge volume (SV) of a vegetable juice is defined as the ratio relative to whole of what is obtained by taking 10ml of the vegetable juice in a centrifugal sedimentation tube of 105mm in length and subjecting it to centrifugation with radius of rotation 14.5cm, rotary speed of 3000rpm for a time duration of 10 minutes. The adjustment of SV can be carried out by filtering such as normal filtering, precision filtering and ultrafiltering or by centrifugation.

According to the invention, the juice is concentrated to Brix 10-60%, and more particularly to Brix 20-40%. As will be explained in detail below, the removal efficiency of nitrate nitrogen improves with the degree of concentration if the vegetable juice is concentrated first and then its concentrate is subjected to electrodialysis. This increase in efficiency is rapid until Brix 10% but the increase becomes gentler thereafter and the efficiency becomes more or less constant after Brix 60%. In view of the limitations on the workability related to the concentration and electrodialysis as well as the equipment used therefor, it is most appropriate to concentrate the vegetable juice to Brix 20-40% from the point of view of carrying out the concentration of the vegetable juice and the electrodialysis of the concentrate stably and smoothly and removing nitrate nitrogen efficiently.

According to this invention, a vegetable juice is concentrated and the concentrate thus obtained is subjected to electrodialysis. There is no particular limitation imposed on the kind of equipment for the electrodialysis as long as it is capable of removing nitrate nitrogen in the form of singly charged NO₃⁻. An apparatus with anion exchange membranes and cation exchange membranes set alternately is usually used. Neither is any particular limitation imposed on the conditions of electrodialysis but it is preferable to carry out the electrodialysis by causing the concentrate to flow at linear speed on the membrane surface in the range of 0.5-1 0cm/sec. It is because the limiting current density drops and the efficiency of removal of nitrate nitrogen becomes poor if the linear speed on the membrane surface is less than 0.5cm/sec and the pressure loss increases and may exceed the limit of resistance of the membranes against pressure if it is greater than 10cm/sec. In the above, the linear speed on the membrane surface means the linear speed of the concentrate at a point adjacent to the ion exchange surface. The temperature of the concentrate at the time of electrodialysis is preferably less than 10°C and more preferably about 5°C for the purpose of preventing bacterial contamination.

### Brief Description of the Drawings

Fig. 1 is a schematic process diagram for showing a process embodying this invention.
Fig. 2 is a graph showing the relationship between the degree of concentration of the vegetable juice and the efficiency of removing nitrate nitrogen according to this invention.
Fig. 3 is a graph showing the relationship between the processing time of electrodialysis of spinach juice according to this invention and the concentration of nitrate nitrogen.
Fig. 4 is a graph showing the relationship between the processing time of electrodialysis of kale juice according to this invention and the concentration of nitrate nitrogen.

### Detailed Description of the Invention

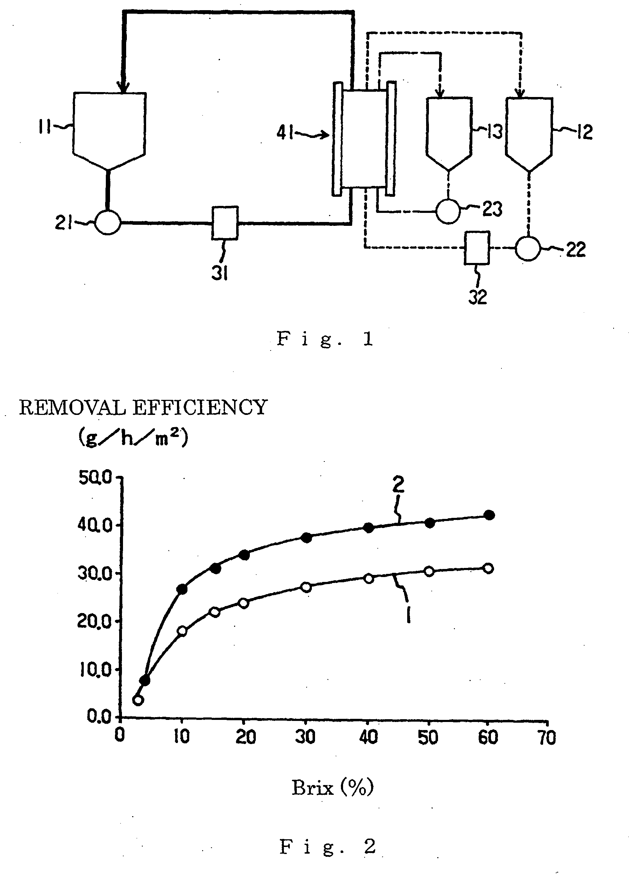

Fig. 1 shows a method according to this invention for carrying out electrodialysis of a concentrate of vegetable juice in a batch process. Vegetable juice is concentrated and its concentrate is placed inside a tank 11. The concentrate is supplied from the tank 11 through a pump 21 and a cooler 31 to a stack 41 of membranes for electrodialysis. After it is subjected to electrodialysis there to have nitrate nitrogen removed, it is returned to the tank 11 and the process is thereafter repeated. A liquid in which the nitrate nitrogen thus removed becomes concentrated is supplied to the stack 41 from a tank 12 through a pump 22 and a cooler 32 and is returned to the tank 12, and this process is thereafter repeated similarly. An electrode liquid is supplied from a tank 13 through a pump 23 to the stack 41 and is then returned to the tank 13, and this process is thereafter repeated.

The stack 41 comprises cation exchange membranes and anion exchange membranes stacked alternately. A positive electrode is inserted through the anion exchange membranes and a negative electrode is inserted through the cation exchange membranes. Such a stacked structure is well known and has been described, for example, in aforementioned Japanese Patent Publication Tokkai 9-103799. As aforementioned electrodialysis process is continued for a specified length of time on a concentrate, the concentrate with nitrate nitrogen removed is gathered inside the tank 11.

The invention is described next by way of test examples.

### Part 1

Spinach was washed and crushed by a blanching process at 95°C for three minutes and spinach juice was obtained by compressing by using a screw press. Spinach juice with Brix 3% and SV 1% was obtained by centrifugation. This spinach juice was subjected to a vacuum concentration process by means of a rotary evaporator to obtain concentrates with Brix 10%, 20%, 30%, 40%, 50% and 60%. The spinach juice and each of these concentrates thus prepared were subjected to electodialysis.

Kale was washed and crushed by a blanching process at 95°C for three minutes and kale juice was obtained by compressing by using a screw press. Kale juice with Brix 5% and SV 1% was obtained by centrifugation. This spinach juice was subjected to a vacuum concentration process by means of a rotary evaporator to obtain concentrates with Brix 10%, 20%, 30%, 40%, 50% and 60%. The kale juice and each of these concentrates thus produced were subjected to electodialysis.

Use was made of an apparatus of a compact type for electrodialysis (Type S3 produced by Asahi Kasei Corporation) provided with a stack of membranes with effective membrane area of 0.055m² having monovalent ion selective cation exchange membranes (Aciplex K192 produced by Asahi Kasei Corporation) and monovalent ion selective anion exchange membranes (Aciplex A192 produced by Asahi Kasei Corporation) alternately. Electrodialysis was carried out with spinach juice, kale juice and their concentrates at temperature 10°C and linear speed on the membrane surface 1.0cm/sec.

Concentration (in ppm) of nitrate nitrogen in each sample (spinach juice, kale juice and their concentrates) was measured before and after electrodialysis by means of an ion chromatograph (DX550 produced by Dionex Corporation) to obtain the removal efficiency against nitrate nitrogen. The obtained removal efficiency is shown in Fig. 2 (curve 1 for spinach juice and its concentrates and curve 2 for kale juice and its concentrates). In the graph of Fig. 2, the horizontal axis indicates the Brix concentration (%) of each sample after electrodialysis and the vertical axis indicates the removal efficiency (g/h/m²) against nitrate nitrogen in terms of the removed amount (g) per unit area (1m²) of the ion exchange membrane per hour of electrodialysis.

Fig. 2 shows that nitrate nitrogen can be removed significantly more efficiently if spinach juice or kale juice is first concentrated and the concentrate thus obtained is subjected to electrodialysis than if the spinach juice or kale juice is subjected to electrodialysis directly. It also shows that the removal efficiency improves as spinach juice or kale juice becomes concentrated by the electrodialysis. The rate of improvement is particularly significant until the Brix concentration reaches 10%. The removal efficiency improves gradually thereafter and becomes more or less constant after Brix concentration reaches 60%.

### Part 2

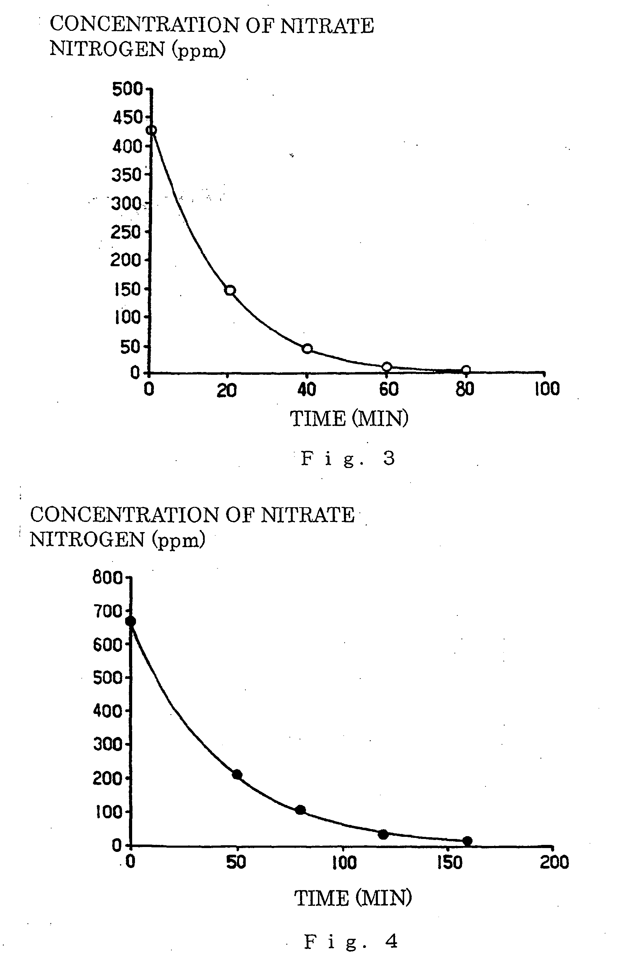

A concentrate of spinach juice concentrated to Brix 20% was subjected to electrodialysis and the concentration (in ppm) of nitrate nitrogen was measured at different process times. The results are shown in Fig. 3, of which the horizontal axis indicates the process time in minutes and the vertical axis indicates the concentration of nitrate nitrogen of the concentrate as converted (or diluted) to Brix 3% of the original spinach juice before the concentration.

A concentrate of kale juice concentrated to Brix 20% was subjected to electrodialysis and the concentration (in ppm) of nitrate nitrogen was similarly measured at different process times. The results are shown in Fig. 4, of which the horizontal axis indicates the process time in minutes and the vertical axis indicates the concentration of nitrate nitrogen of the concentrate as converted (or diluted) to Brix 5% of the original kale juice before the concentration.

### Part 3

Concentrates of spinach juice concentrated respectively to Brix 10%, 20% and 30% were subjected to electrodialysis as done in Part 1 except that the linear speed (in cm/sec) on the membrane surface was varied in six stages as shown in Table 1. The removal efficiency values (in g/h/m²) against nitrate nitrogen were obtained and are shown in Table 1 relative to the value obtained for the concentrate with Brix 20% when the linear speed on the membrane surface was 1.0cm/sec.

**Table 1**

| Brix (%) | Linear speed (cm/sec) | | | | | |
|---|---|---|---|---|---|---|
| | 0.1 | 0.5 | 1 | 2 | 5 | 10 |
| 10 | 0.2 | 0.4 | 0.5 | 0.6 | 0.7 | 0.7 |
| 20 | 0.4 | 0.9 | 1.0 | 1.2 | 1.4 | 1.6 |
| 30 | 0.4 | 0.9 | 1.1 | 1.3 | 1.4 | 1.5 |

Table 1 shows that the removal efficiency against nitrate nitrogen deteriorates if the linear speed on the membrane surface is reduced to below 0.5cm/sec.

### Part 4

A concentrate of spinach juice concentrated to Brix 20% under reduced pressure was subjected to electrodialysis as done in Part 1 and it was diluted with water to a Brix concentration level of 3% of the original spinach juice to obtain a spinach juice with concentration of nitrate nitrogen 43ppm. Separately, another concentrate of spinach juice with Brix 20% obtained under reduced pressure was diluted with water to a Brix concentration level of 3% of the original spinach juice, and 200ml of strongly alkaline ion exchange resin (Amberlite IRA400 produced by Organo Corporation) was added to 2 liters of the spinach juice thus obtained. The mixture was stirred for an ion exchange process and a spinach juice with concentration of nitrate nitrogen 47ppm was obtained. A total of 30 testers with 15 men and 15 women tasted both in a sensory test to determine which spinach juice tasted better. The result is shown in Table 2.

Similarly, a concentrate of kale juice concentrated to Brix 20% under reduced pressure was subjected to electrodialysis as done in Part 1 and it was diluted with water to a Brix concentration level of 5% of the original kale juice to obtain a kale juice with concentration of nitrate nitrogen 47ppm. Separately, another concentrate of kale juice with Brix 20% obtained under reduced pressure was diluted with water to a Brix concentration level of 5% of the original kale juice, and 200ml of strongly alkaline ion exchange resin (Amberlite IRA400 produced by Organo Corporation) was added to 2 liters of the kale juice thus obtained. The mixture was stirred for an ion exchange process and a spinach juice with concentration of nitrate nitrogen 45ppm was obtained. A total of 30 testers with 15 men and 15 women tasted both in a sensory test to determine which spinach juice was more tasteful. The result is also shown in Table 2.

**Table 2**

| | Number of testers preferring the juice after electrodialysis | Level of significance |
|---|---|---|
| Spinach juice | 24 | 0.1% |
| Kale juice | 25 | 0.1% |

Table 2 shows that nitrate nitrogen can be efficiently removed from vegetable juices by a method of this invention without adversely affecting their natural flavors.

## Claims

1. A method of removing nitrate nitrogen from a vegetable juice, said method comprising the steps of concentrating said vegetable juice to obtain a concentrate and subjecting said concentrate to electrodialysis, wherein said vegetable juice is concentrated to Brix concentration 10-60%.

2. The method of claim 1 wherein said vegetable juice is juice of leafy vegetables.

3. The method of claim 2 wherein said leafy vegetables include at least one selected from the group consisting of celery, spinach and kale.

4. The method of claim 1 wherein said vegetable juice has a sludge volume adjusted to 10% or less.

5. The method of any of claims 1 to 4 wherein vegetable juice is concentrated to Brix concentration 20-40%.

6. The method of any of claims 1 to 5 wherein said electrodialysis is carried out by flowing said concentrate at a linear speed of 0.5-10cm/sec on a membrane surface.

7. The method of any of claims 1 to 6 wherein said concentrate is subjected to electrodialysis at a temperature of 10°C or lower.

## Patentansprüche

1. Verfahren zum Entfernen von Nitrat-Stickstoff aus einem Gemüsesaft, wobei das Verfahren die Schritte des Konzentrierens des Gemüsesafts zum Erhalt eines Konzentrats umfasst und Aussetzen des Konzentrats der Elektrodialyse, worin der Gemüsesaft auf eine Brix-Konzentration von 10 - 60 % konzentriert wird.

2. Verfahren nach Anspruch 1, worin der Gemüsesaft Saft aus Blattgemüsen darstellt.

3. Verfahren nach Anspruch 2, worin die Blattgemüse mindestens eines einschließen, das aus der Gruppe ausgewählt ist, bestehend aus Sellerie, Spinat und Kohl.

4. Verfahren nach Anspruch 1, worin der Gemüsesaft ein auf 10 % oder niedriger eingestelltes Schlammvolumen aufweist.

5. Verfahren nach einem der Ansprüche 1 bis 4, worin der Gemüsesaft auf eine Brix-Konzentration von 20 - 40 % konzentriert ist.

6. Verfahren nach einem der Ansprüche 1 bis 5, worin die Elektrodialyse durch Fließen des Konzentrats bei einer Lineargeschwindigkeit von 0,5 - 10 cm/sec an einer Membranoberfläche durchgerührt wird.

7. Verfahren nach einem der Ansprüche 1 bis 6, worin das Konzentrat der Elektrodialyse bei einer Temperatur von 10 °C oder niedriger ausgesetzt wird.

## Revendications

1. Procédé pour éliminer l'azote de nitrate dans un jus de légumes, ledit procédé comprenant les étapes consistant à concentrer ledit jus de légumes pour obtenir un concentré et à soumettre ledit concentré à une électrodialyse, où ledit jus de légumes est concentré jusqu'à une concentration Brix de 10-60%.

2. Procédé selon la revendication 1 dans lequel ledit jus de légumes est un jus de légumes-feuilles.

3. Procédé selon la revendication 2 dans lequel lesdits légumes-feuilles comprennent au moins un légume choisi dans le groupe constitué du céleri, de l'épinard et du chou vert.

4. Procédé selon la revendication 1 dans lequel ledit jus de légumes a un volume de boues ajusté à 10% ou moins.

5. Procédé selon l'une quelconque des revendications 1 à 4 dans lequel le jus de légumes est concentré jusqu'à une concentration Brix de 20-40%.

6. Procédé selon l'une quelconque des revendications 1 à 5 dans lequel ladite électrodialyse est effectuée en faisant couler ledit concentré à une vitesse linéaire de 0,5-10 cm/s sur la surface d'une membrane.

7. Procédé selon l'une quelconque des revendications 1 à 6 dans lequel ledit concentré est soumis à l'électrodialyse à une température de 10°C ou moins.
